# EUROPEAN PATENT APPLICATION

(11) **EP 4 703 784 A1**
(43) Date of publication of application: **04.03.2026**
(21) Application number: 24728851.7
(22) Date of filing: 23.04.2024
(51) Int. Cl.: G02B 7/00, G02B 5/20, G02B 21/06, G02B 7/182, G02B 21/36

(54) **FLUORESCENT FILTER BLOCK ASSEMBLY IN WHICH MULTI-CHANNEL FLUORESCENT FILTER SET AND LIGHT SOURCE ARE COMBINED**

(30) Priority: 24.04.2023 KR 20230053148; 16.06.2023 KR 20230077442; 14.07.2023 KR 20230091659
(71) Applicant: CURIOSIS INC., Seoul 06221 (KR)
(72) Inventor: PARK, Youngho, Seoul 06221 (KR); AN, Sungeun, Seoul 06221 (KR); KIM, Bongwoo, Seoul 06221 (KR); JO, Taeyeon, Seoul 06221 (KR); CHOI, Minji, Seoul 06221 (KR); PARK, Yonghee, Seoul 06221 (KR)
(74) Representative: Viering, Jentschura & Partner mbB Patent- und Rechtsanwälte
(86) International application number: PCT/KR2024/005486
(87) International publication number: WO 2024/225728

(57) **Abstract**

The present disclosure relates to a fluorescent filter block assembly combined with a multi-channel fluorescent filter set and a light source, and more specifically, to an improved fluorescent filter block assembly in which a plurality of fluorescent filter sets are applied to one housing without using a carriage in a fluorescent optical system, and the light source is integrally formed with the housing to form a single body, so that it is possible to reduce in size, to accurately align an optical path between the light source and an objective lens, and to smoothly and accurately implement the fluorescent optical system without a power supply failure, and furthermore, it is possible to enable an automatic operation through a driving source so that an accurate and rapid alignment is possible.

## Description

### [Technical Field]

The present disclosure relates to a fluorescent filter block assembly combined with a multi-channel fluorescent filter set and a light source, and more specifically, to an improved fluorescent filter block assembly in which a multi-channel fluorescent filter set and a light source are combined, in which a plurality of fluorescent filter sets are applied to one housing without using a carriage in a fluorescent optical system, and the light source is integrally formed with the housing to form a single body, so that it is possible to reduce in size, to accurately align an optical path between the light source and an objective lens, and to smoothly and accurately implement the optical system without a power supply failure.

Further, the present disclosure relates to a fluorescent filter block assembly with an improved automatic positioning function, in which the fluorescent filter block assembly has the automatic positioning function to enable an automatic operation through a driving source such that an accurate and rapid alignment operation is possible.

### [Background Art]

A fluorescent optical system is an optical system that observes an object using fluorescence emitted from a sample by illuminating the sample with a light source of various wavelengths, and is mainly used when the sample itself emits fluorescence or when a fluorescent material is adsorbed onto the sample. For example, the fluorescent optical system is used to label a specific cell with a fluorescent dye or a fluorescent antibody, and to study an intracellular structure and function of the cell.

In this case, the fluorescent optical system includes a plurality of filters corresponding to the wavelength coinciding with the light source and the fluorescent dye. For example, the filters may include an excitation filter used to select an excitation wavelength of light emitted from the light source, a dichroic beamsplitter that splits a beam to irradiate the sample with the light that has passed through the excitation filter, and an emission filter that allows only a narrow wavelength band around a maximum fluorophore emission wavelength to pass therethrough while blocking undesired traces (noise) of reflected excitation light in response to the fluorescence of the sample, thereby allowing only the desired fluorescence of the sample to reach a detector.

Mercury and xenon arc lamps are mainly used as light sources, and recently, inexpensive and accurate solid state light sources, for example, LEDs, are widely used as an alternative to the arc lamps.

Recently, a fluorescence channel for observing various wavelengths has been used in the fluorescence optical system, and in this case, a type in which a light source and a fluorescence filter block are separately present has been commonly used in the optical system. In this method, three fluorescent components of the excitation filter, the beamsplitter, and the emission filter are combined into one block, and the light source is separately disposed, and in this case, a structure in which a plurality of blocks are combined with one rotating turret may be provided. In this case, since a volume of the external light source is large and a size of the filter block increases because the fluorescent optical system is a turret-type multi-channel, and a volume of equipment increases as a whole, making it difficult to reduce the size.

In addition, several attempts have been made to reduce in size of the multi-channel fluorescent optical system, and recently, a structured type has been used to combine three fluorescent sets and the light source into one block, and then to place each block on the turret such that the block may be rotatably replaced. However, in this case, since a plurality of housings having three fluorescent sets and a light source are formed, the size becomes relatively large, so that there is a limitation in reduction in size. Furthermore, since a turret-type rotation method is used, a contact point for connection with a circuit board in a receptacle is necessarily provided for each block in order to supply power to the light source, when the structure becomes complicated and contact failure occurs due to foreign substances during rotational contact, observation is impossible due to poor lighting caused by the light source.

Furthermore, in a structure where the filter block is manually operated when a position of the filter block is moved and aligned to use the filter block, an experimental error occurs when the position of the filter block is mistaken, and when the filter block is automatically adjusted, a turret-type carriage is necessarily rotated, causing limitations in an increase in volume and difficulty in linear position alignment.

Accordingly, there is a need to develop a filter block assembly that is reduced in size and enables automatic positioning such that the filter block assembly may be effectively used in a fluorescence microscope.

### [Related art documents]

(Patent Literature 1) US Registered Patent Publication No. 9347852 (May 24, 2016)

### [Disclosure]

### [Technical Problem]

An object of the present disclosure is to provide a fluorescent filter block assembly combined with a multi-channel (that is, two or more channels) fluorescent filter set and a light source, that is, a filter block assembly with an improved automatic positioning function, in which a plurality of fluorescent filter sets are applied to one housing without using a carriage in a fluorescent optical system, and the light source is integrally formed with the housing to form a single body, so that it is possible to reduce in size, to accurately align an optical path between the light source and an objective lens, and to smoothly and accurately implement the optical system without a power supply failure, and furthermore, it is possible to enable an automatic operation through a driving source so that an accurate and rapid alignment is possible.

### [Technical Solution]

In one general aspect, a fluorescent filter block assembly comprises:
one housing;
two or more fluorescent filter sets built into the housing; and
a light source assembled to the housing to provide lighting.

In another general aspect, a fluorescent filter block assembly comprises:
a housing (for example, one housing); two or more fluorescent filter sets built into the housing; and a light source assembled to the housing to provide lighting,
wherein the housing includes a driving unit, in which the driving unit enables automatic positioning of the two or more fluorescent filter sets.

In one embodiment, the fluorescent filter block assembly may not use a carriage.

In one embodiment, the fluorescent filter set may include three fluorescent components including an excitation filter, a dichroic beamsplitter, and an emission filter.

In one embodiment, the three fluorescent components may be sequentially arranged in order of the excitation filter, the dichroic beamsplitter, and the emission filter.

In one embodiment, the three fluorescent components may be implemented in a circular, polygonal, star, or elliptical shape.

In one embodiment, the light source may be fixed to a light module, in which the light module may be assembled to one side of each fluorescent filter set of the housing. The light source may be an LED.

In one embodiment, at least one condensing lens may be further installed between the light source and the fluorescent filter set.

In one embodiment, the fluorescent filter block assembly may further include one brightfield channel, in which the brightfield channel may be built into the housing.

In one embodiment, the fluorescence filter set may be arranged in a straight, curved, or circular shape.

In one embodiment, the driving unit may include a driving source fixed to a housing, and a guide for controlling and guiding an operation of the driving source.

In one embodiment, the driving source may be a driving motor, a linear motor, a piezoelectric motor, a solenoid actuator, or a voice coil.

In one embodiment, the guide may be a sliding guide for linear movement.

In one embodiment, the driving source may be a driving motor, a pinion may be fixed to the driving motor, and the pinion may be tooth-engaged with a rack.

In one embodiment, the driving source may be a driving motor, a ball screw or a lead screw may be fixed to the driving motor, and the screw may be tooth-engaged with a nut.

In one embodiment, the driving source may be the linear motor, and the linear motor may be fitted into a magnet track.

In one embodiment, the housing may further include a sensor for detecting a position of the housing.

In one embodiment, the sensor may be one or more selected from the group consisting of a linear encoder, a circular encoder, and a limit switch.

In another general aspect, a fluorescent filter block assembly for a fluorescence imaging optical system comprises:
one housing;
two fluorescent filter sets and one brightfield channel built into the housing; and
a light source assembled to the housing to provide lighting,
wherein the fluorescent filter set includes three fluorescent components consisting of an excitation filter, a dichroic beamsplitter, and an emission filter, in which the three fluorescent components are sequentially arranged in order of the excitation filter, the dichroic beamsplitter, and the emission filter based on the light source.

In another general aspect, a fluorescent filter block assembly comprises:
one housing;
two fluorescent filter sets and one brightfield channel built into the housing; and
a light source assembled to the housing to provide lighting,
wherein the fluorescent filter set includes three fluorescent components consisting of an excitation filter, a dichroic beamsplitter, and an emission filter, in which the three fluorescent components are sequentially arranged in order of the excitation filter, the dichroic beamsplitter, and the emission filter based on the light source, and
wherein the housing includes a driving unit, in which the driving unit includes a driving motor as a driving source and a sliding guide as a guide, and enables automatic positioning of the two fluorescent filter sets.

In one embodiment, the housing may be built with three fluorescence filter sets and one brightfield channel, four fluorescence filter sets and one brightfield channel, five fluorescence filter sets and one brightfield channel, six fluorescence filter sets and one brightfield channel, etc.

In one embodiment, a pinion may be fixed to the driving motor, the pinion may be tooth-engaged with a rack, and the housing may further include a sensor for detecting a position of the housing, in which the sensor may be a linear encoder and a limit switch.

In one embodiment, the fluorescent filter block assembly for a fluorescence imaging optical system may include:
one housing;
two fluorescent filter sets and one brightfield channel built into the housing; and
two light sources assembled to each fluorescent filter set of the housing to provide lighting,
wherein the fluorescent filter block assembly does not use a carriage,
wherein the one brightfield channel is positioned between the two fluorescent filter sets,
wherein the light sources are fixed to light modules, respectively, in which each light module is assembled to one side of each fluorescent filter set of the housing to align an optical path between the light source and an objective lens,
wherein light emitted from the light source is irradiated to a sample through the objective lens, and
wherein the housing is a slidable housing that further includes a driving motor, and the two fluorescent filter sets and the one brightfield channel are replaceably used through the slidable housing.

In another embodiment, the fluorescent filter block assembly for a fluorescence imaging optical system may include:
one housing;
two fluorescent filter sets and one brightfield channel built into the housing;
two light sources assembled to each fluorescent filter set of the housing to provide lighting; and
a driving unit,
wherein the fluorescent filter block assembly does not use a carriage,
wherein the one brightfield channel is positioned between the two fluorescent filter sets,
wherein the light sources are fixed to light modules, respectively, in which each light module is assembled to one side of each fluorescent filter set of the housing to align an optical path between the light source and an objective lens,
wherein light emitted from the light source is irradiated to a sample through the objective lens,
wherein the driving unit includes:
   a driving source fixed to the housing; and
   a guide for controlling and guiding an operation of the driving source,
   wherein the driving source is positioned between the fluorescent filter sets to which light modules are assembled, respectively, and is fixed to one side of a surface on which each light module is assembled, and
   wherein the driving unit is automatically replaceable by automatically positioning the two fluorescent filter sets and the one brightfield channel.

### [Advantageous Effects]

The representative effects according to the present disclosure are as follows.

First, a plurality of fluorescence filter sets and a light source are integrally formed in one housing, thereby reducing the overall size and manufacturing cost of the optical system, and being appropriately employed in a multi-channel fluorescence microscope.

Second, since a linear sliding-type is used, a plate and a carriage for fixing the housing are not separately required, so that the structure is simple and brief, thereby reducing the number of components, and since the structure is not complicated, the probability of failure is relatively low.

Third, since a power supply structure is simple and clear, so that measurement defects do not occur.

Fourth, when an LED light source is used, energy saving is possible because of no heat generation, and particularly, the LED light source is suitable for use in a live cell imaging (LCI) microscope.

Fifth, optical alignment and coupling are more stable than the separation type because the filter block is not divided into individual blocks.

Sixth, it is possible to move the position of the filter block to a correct position through electronic control.

Seventh, when automation is performed, the filter block may move in order set in advance by a user.

Eighth, each filter block is integrally formed without being divided into individual blocks, and each light module is assembled at one side of each fluorescent filter set of the housing, so that the optical path between the light source and the objective lens is aligned, thereby increasing light efficiency and reducing a time required to use the light, and ultimately reducing a condensation occurrence rate.

### [Description of Drawings]

FIG. 1 is an exemplary view of a filter block assembly according to the present disclosure.
FIG. 2 is a sectional view taken along line A-A in FIG. 1.
FIG. 3 is an exemplary exploded view of a fluorescent filter set and a light source constituting the filter block assembly according to the present disclosure.
FIGS. 4 to 6 are exemplary views of the filter block assembly according to the present disclosure when viewed at different angles.
FIG. 7 is an exemplary view showing another example of the filter block assembly according to the present disclosure.

### [Mode for Carrying out the Invention]

Hereinafter, preferred embodiments according to the present disclosure will be described in more detail with reference to the accompanying drawings.

Prior to the description of the present disclosure, the following specific structures or functional descriptions are merely illustrated for the purpose of describing embodiments according to the concept of the present disclosure, and the embodiments according to the concept of the present disclosure may be implemented in various forms and should not be interpreted as being limited to the embodiments described in the present specification.

In addition, embodiments in accordance with the concept of the present disclosure may be modified in various ways and take many different forms, so that specific embodiments will be illustrated in the drawings and described in detail herein. However, this is not intended to limit the embodiments according to the concept of the present disclosure to specific disclosure forms, and it should be understood that the embodiments include all modifications, equivalents, and substitutes included in the spirit and technical scope of the present disclosure.

A fluorescence imaging optical system, for example, a fluorescence microscope, according to the present disclosure requires at least two or more fluorescent channels to measure two or more wavelength bands. The fluorescent imaging optical system concentrates light emitted from a light source of a specific wavelength band through an objective lens to excite a fluorescent material labeled on a cell, and collects light of a wavelength emitted therefrom using an image sensor, and in this case, it should be noted that misalignment makes image collection impossible or causes severe quality degradation.

Therefore, the present disclosure implements integration of a plurality of fluorescent filter sets and the light source by combining the plurality of fluorescent filter sets and the light source into one housing to achieve reduction in size and secure high precision due to easy and accurate optical alignment.

Above all, the present disclosure is not an individual filter block structure, and thus there is no need for a plate or a carriage which is indispensable and required in the related art, and particularly, it is not required to have a complicated contact connection structure for connecting the existing circuit board because the connection of a lead wire for supplying power is simple and easy, so that there is an advantage that the structure becomes simple and brief, thereby providing a structure optimized for miniaturization.

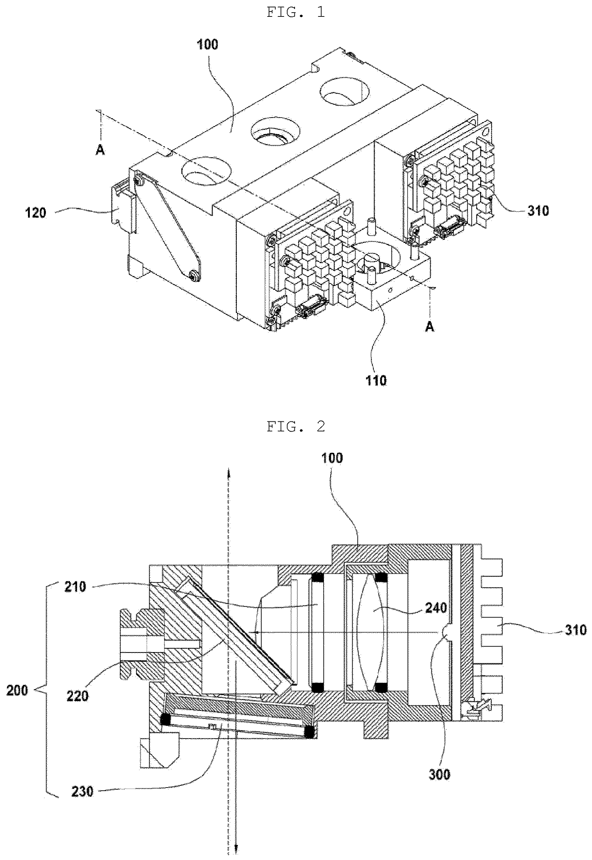

As shown in FIGS. 1 to 3, the fluorescent filter block assembly according to the present disclosure includes one housing 100, a plurality of (that is, two or more) fluorescent filter sets 200 built into the housing 100, and a light source 300 assembled to the housing 100 to provide lighting.

The term "built" or "assembled" as used herein with respect to "housing" indicates that the respective components, that is, a fluorescent filter set, a light source, a bright field channel, etc., are not separately distinguished, but are integrally formed in one housing. However, each of the components is only physically and integrally formed, and each of the components is formed to independently exhibit its own function or effect.

Accordingly, the fluorescent filter block assembly according to the present disclosure does not include a plate or a carriage. That is, the fluorescent filter block assembly according to the present disclosure is configured as one housing, and does not require a separate structure for accommodating each filter set or filter block.

In one embodiment, at least two or more fluorescent filter sets 200 are integrally formed with the housing 100, thereby implementing at least two fluorescent channels. Accordingly, the term "fluorescent filter set" as used herein may be used interchangeably with "fluorescent channel".

In one embodiment, the fluorescent filter set 200 may include three fluorescent components, in which the three fluorescent components may include an excitation filter 210, a dichroic beamsplitter 200, and an emission filter 230. Furthermore, the filter set 200 may be arranged in order of the excitation filter 210, the dichroic beamsplitter 200, and the emission filter 230 based on the light source 300. In addition, the three fluorescent components included in the filter set 200 may be implemented in various shapes such as a circular, polygonal, star, and elliptical shapes.

In this case, the excitation filter 210 is a unit for transmitting only a wavelength (that is, an excitation wavelength) of illumination light that efficiently excites a specific fluorophore among light provided from the light source or a narrow wavelength band around the wavelength.

The dichroic beamsplitter 220 is a unit for reflecting light such that the transmitted excitation light of the excitation wavelength is irradiated to a sample. The dichroic beamsplitter 220 is referred to as a dichroic mirror.

The emission filter 230 is a unit for transmitting only a narrow wavelength band around or at a wavelength emitted from the sample such that a desired fluorescence of the sample reaches a detector while blocking noise of the excitation light. That is, sample molecules are electronically and vibrationally excited by entering photons, heated, and relaxed to a low vibrational state, and then emit photons of higher wavelength, i.e., lower energy than absorbed, to return to an electronic ground state. In this case, fluorescent molecules absorb a specific wavelength and emit light at another wavelength, and thus, the sample may be identified by a fluorescence emission spectrum thereof as an incident light wavelength that has been already known.

However, the fluorescent filter set 200 may be used without limitation as long as it may extract light having a specific wavelength from a mixture of lights having various wavelengths, in addition to a case in which the fluorescent filter set 200 includes the above-described three fluorescent components. For example, a filter that transmits light at a constant transmittance regardless of wavelength, a correction filter that adjusts light intensity in a specific wavelength region, a broadband filter, or the like may be used. In addition, the filter may be classified into a filter for an infrared region, a filter for a visible region, a filter for an ultraviolet region, a filter for a vacuum ultraviolet region, etc., according to a frequency region to be used.

In one embodiment, the light source 300 may be used without limitation as long as it is commonly used in the fluorescent imaging optical system. For example, as the light source 300, mercury, xenon, an LED light source, and the like may be used, and preferably, an LED.

In one embodiment, in a state in which the light source 300 is fixed to the light module 310, the light module 310 is integrally formed with the housing 100 while being assembled to one end of the housing 100.

In one embodiment, a condensing lens 240 may or may not be further installed between the light source 300 and the fluorescent filter set 200, for example, the excitation filter 210. Further, a plurality of condensing lenses 240 may be installed in addition to one condensing lens to further improve condensing quality.

In one embodiment, the fluorescent filter block assembly may further include one brightfield channel, in which the brightfield channel may be built into the housing 100.

In a specific embodiment, as shown in FIG. 1, two fluorescent filter sets 200 may be formed at both sides of the housing 100, and one brightfield channel may be formed at the center of the housing 100. It is obvious that three, four, five, six, seven or more fluorescent filter sets may be formed.

In this case, although not shown, a plurality of fluorescent channels, for example, two fluorescent channels and one brightfield channel, are physically and integrally formed within one housing 100, but are independently and functionally formed.

In one embodiment, the plurality of fluorescent filter sets may be arranged in a curved or circular shape in addition to a straight shape. If a brightfield channel may be further included, which will also follow the arrangement of the fluorescent filter set.

When the fluorescent filter block assembly of the present disclosure is compared with the related art, in one aspect, all main components are built into or assembled to the housing 100, so that the housing or the fluorescent filter block assembly may be regarded as one filter block in some cases, thereby easily and accurately enabling optical alignment, facilitating drive and control, and reducing in size.

In one embodiment, the housing 100 is configured while linearly sliding such that the plurality of fluorescent channels are replaceably used. In one implementation example, the housing 100 may be used to replace two fluorescent channels and one brightfield channel.

To this end, the housing 100 may further include a driving motor and a sliding guide. In one implementation example, the housing 100 has a motor base 110 that is fixed to one side of a surface on which the light module 310 is assembled, and a sliding guide 120 that is integrally fixed to an opposite side of a surface on which the motor base 110 is installed.

In one embodiment, the housing 100 enables automatic positioning of two or more fluorescent filter sets so that the two or more fluorescent filter sets may be automatically and replaceably used. In one implementation example, when the plurality of fluorescent filter sets are arranged in a straight shape, the housing 100 may be configured to automatically position the two or more fluorescent filter sets while linearly sliding. In addition, when the fluorescent filter sets are arranged in a curved or circular shape, the housing 100 may be configured such that positions of the fluorescent filter sets are automatically adjusted according to the arrangement structure thereof. If a brightfield channel is further included, it may also follow the arrangement of the fluorescent filter set.

In one implementation example, the housing 100 may be configured such that two fluorescent filter sets and one brightfield channel are automatically and replaceably used by automatically positioning the same.

To this end, the housing 100 may further include a driving unit. In one embodiment, the driving unit may include a driving source to move the respective channels such that the plurality of fluorescent channels and/or the brightfield channel in the housing 100 are automatically positioned. In one implementation example, when a plurality of channels are arranged in a straight shape, the driving source may linearly slide the housing 100 to automatically position the respective channels. In this case, the driving source may be fixed to the housing. The driving source may be used without limitation as long as it is attached to the housing to move a device or a component, and examples thereof may include a driving motor (rotary motor), a linear motor, a piezoelectric motor (referred to as a "piezo motor") employing piezo effect, an ultrasonic motor using ultrasonic waves, a solenoid actuator using a force of an electromagnet, a voice coil which is another type using a force of an electromagnet, etc.

In another embodiment, the driving unit may include a guide in addition to the driving source. In this case, the guide may be used without limitation as long as an operation of the driving source may be controlled and guided, and examples thereof may include: a sliding guide for linear movement; a rail or track for guiding movement along a specific path; a bearing for smooth movement and reducing friction between components moved by the driving source; a pin or shaft, etc.

In one implementation example, the driving unit may include a driving motor 130 as a driving source and the sliding guide 120 as a guide. In one implementation example, the housing 100 has a motor base 110 that is fixed to one side of a surface on which the light module 310 is assembled, and a sliding guide 120 that is fixed to a side that is the same as or different from the one side to which the motor base is fixed.

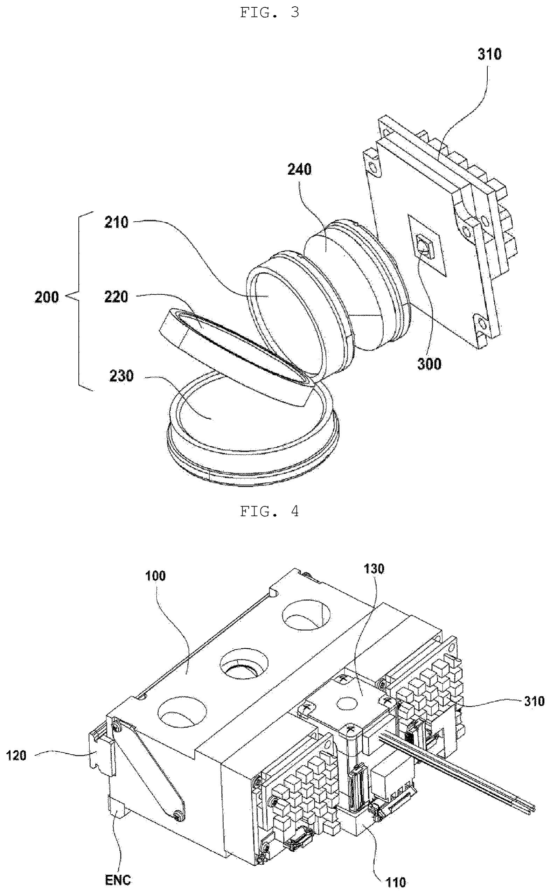

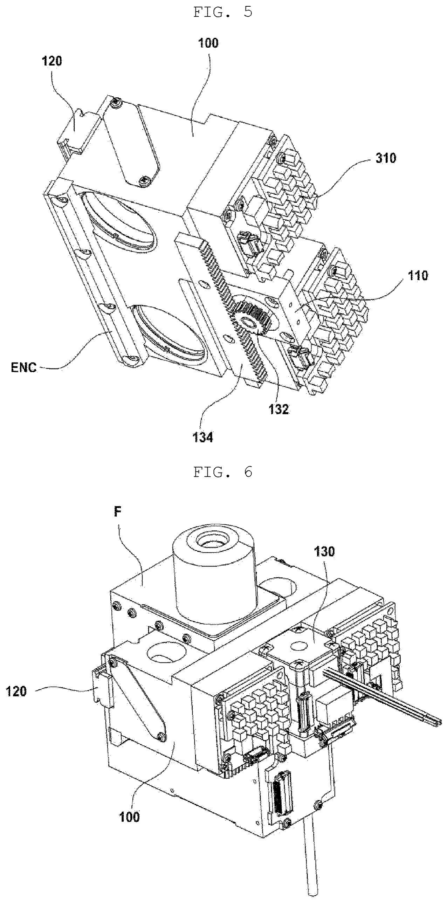

In one embodiment, as shown in FIGS. 4 to 6, the sliding guide 120 may be fitted into a sliding groove (not shown) of a coupling member F (see FIG. 6), which is fixed to a receptacle, and is slidably assembled along the sliding groove.

In one embodiment, the driving motor 130 is fixedly seated on the motor base 110, and a pinion 132 is fixed to a motor shaft of the driving motor 130. Furthermore, a rack 134 is fixed to a position of the coupling member F corresponding to the pinion 132, and the pinion 132 is tooth-engaged with the rack 134.

In still another embodiment, instead of the rack and the pinion, a ball screw or lead screw is fixed to the driving motor, and the screw may be tooth-engaged with the nut.

In this case, a linear encoder ENC may be installed on one side of the housing 100.

The linear encoder ENC is an electronic element that recognizes a linear motion as an absolute position value, and in case of a non-contact type, the linear encoder ENC is very useful to find the absolute position value because abrasion and maintenance are not required and reference movement is not required. Thus, a user may automatically recognize and move according to the order and position set in advance, so that accurate alignment is possible and defects due to position errors do not occur.

In this case, instead of the linear encoder ENC, a circular encoder may be used to calculate a position value by reading the number of revolutions of the driving motor 130, and a limit switch may be used to physically control the absolute position value. In addition, any sensor that measures position information of the housing may be used without limitation, and the sensors may be used in combination of one or more types. For example, when the linear encoder ENC and the limit switch are used together, more accurate position control may be possible. Types of such sensors are known to those skilled in the art.

Accordingly, when the driving motor 130 is driven, the pinion 132 is rotated and the pinion 132 moves with respect to the fixed rack 134, so that the housing 100 to which the driving motor 130 is fixed may change use positions of the plurality of fluorescent channels while sliding. That is, when it is necessary to perform observation using the first fluorescent channel and then switch to the second fluorescent channel, the driving motor 130 is driven to move the housing 100. Then, the second fluorescent channel is positioned at an observable position, and thus a sample may be observed using the second fluorescent channel.

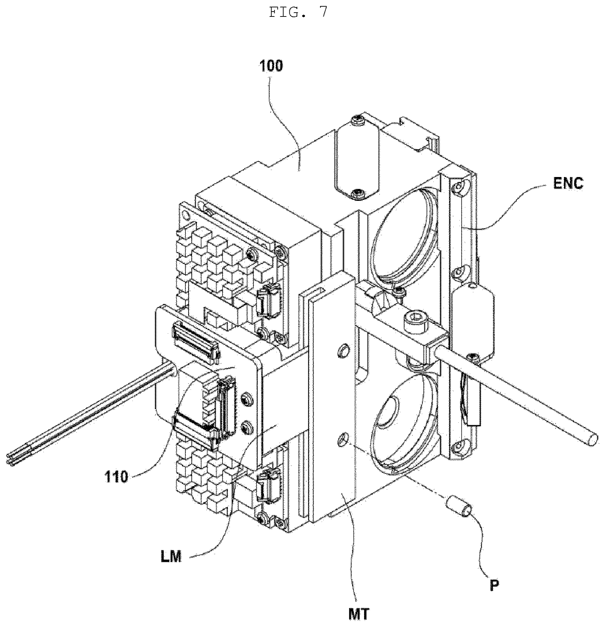

In still another implementation example, a linear motor may be used as a driving motor of the driving unit, in which the linear motor may be used together with a magnet track. In one implementation example, as shown in FIG. 7, a linear motor LM is fixed onto the motor base 110, and a magnet track MT is fixed to the coupling member F (see FIG. 6).

The magnet track MT may be detachably fixed by a fixing pin P, a screw, or a bolt. The magnet track MT is formed in a "⊃" shape having an insertion groove, and is configured to operate in a state in which a portion of the linear motor LM is inserted into the insertion groove. That is, the linear motor LM linearly reciprocates along the magnet track MT, which is a magnet.

Even in this case, a sensor for measuring linear position information, for example, the linear encoder ENC may be installed to enable absolute position control, and the limit switch, instead of the linear encoder ENC, may be installed and used.

As described above, the present disclosure may provide an improved filter block assembly combined with two or more channels of fluorescent filter sets and a light source, in which a plurality of fluorescent filter sets are applied to one housing without using a carriage in a fluorescent imaging optical system, and the light source is integrally formed with the housing to form a single body, so that it is possible to reduce in size and smoothly and accurately implement the optical system without a power supply failure.

In one embodiment, the fluorescent filter block assembly according to the present disclosure is used in the fluorescent imaging optical system. Accordingly, the present disclosure provides a fluorescent filter block assembly for a fluorescent imaging optical system.

In still another embodiment, the present disclosure provides a fluorescent imaging optical system including the fluorescent filter block assembly. As used herein, the term "fluorescent imaging optical system" includes, without limitation, any optical system capable of fluorescence imaging, and may representatively be a fluorescence microscope or live cell imaging equipment. Therefore, the imaging optical system including the fluorescence filter block assembly according to the present disclosure is distinguished from equipment used for simply detecting fluorescence, and in this case, the imaging optical system may be used for imaging by irradiating a sample with light emitted from the light source through the objective lens.

### [Detailed Description of Main Elements]

100: housing
200: filter set
300: light source

## Claims

1. A fluorescent filter block assembly comprising:
one housing;
two or more fluorescent filter sets built into the housing; and
a light source assembled to the housing to provide lighting.

2. The fluorescent filter block assembly of claim 1, wherein the fluorescent filter block assembly does not use a carriage.

3. The fluorescent filter block assembly of claim 1, wherein the housing includes a driving unit, in which the driving unit enables automatic positioning of the two or more fluorescent filter sets.

4. The fluorescent filter block assembly of claim 3, wherein the driving unit includes:
a driving source fixed to the housing; and
a guide for controlling and guiding an operation of the driving source.

5. The fluorescent filter block assembly of claim 4, wherein the driving source is a driving motor, a linear motor, a piezoelectric motor, a solenoid actuator, or a voice coil.

6. The fluorescent filter block assembly of claim 4, wherein the guide is a sliding guide for linear movement.

7. The fluorescent filter block assembly of claim 3, wherein the housing further includes a sensor for detecting a position of the housing.

8. The fluorescent filter block assembly of claim 1, wherein the fluorescent filter set includes three fluorescent components including an excitation filter, a dichroic beamsplitter, and an emission filter.

9. The fluorescent filter block assembly of claim 1, wherein the light source is fixed to a light module, in which the light module is assembled to one side of each fluorescent filter set of the housing.

10. The fluorescent filter block assembly of claim 1, wherein at least one condensing lens is further installed between the light source and the fluorescent filter set.

11. The fluorescent filter block assembly of claim 1, wherein the fluorescent filter block assembly further includes one brightfield channel, in which the brightfield channel is built into the housing.

12. A fluorescent filter block assembly for a fluorescence imaging optical system, the fluorescent filter block assembly comprising:
one housing;
two fluorescent filter sets and one brightfield channel built into the housing; and
a light source assembled to the housing to provide lighting,
wherein the fluorescent filter set includes three fluorescent components consisting of an excitation filter, a dichroic beamsplitter, and an emission filter, in which the three fluorescent components are sequentially arranged in order of the excitation filter, the dichroic beamsplitter, and the emission filter based on the light source.

13. A fluorescent filter block assembly comprising:
one housing;
two fluorescent filter sets and one brightfield channel built into the housing; and
a light source assembled to the housing to provide lighting,
wherein the fluorescent filter set includes three fluorescent components consisting of an excitation filter, a dichroic beamsplitter, and an emission filter, in which the three fluorescent components are sequentially arranged in order of the excitation filter, the dichroic beamsplitter, and the emission filter based on the light source, and
wherein the housing includes a driving unit, in which the driving unit includes a driving motor as a driving source and a sliding guide as a guide, and enables automatic positioning of the two fluorescent filter sets.
